(19) Europäisches Patentamt
European Patent Office
Office européen des brevets

(11) **EP 3 633 561 A1**

(12) **EUROPEAN PATENT APPLICATION**

(43) Date of publication:
**08.04.2020 Bulletin 2020/15**

(51) Int Cl.:
***G06N 5/02*** *(2006.01)* ***G06F 16/36*** *(2019.01)*

(21) Application number: **18198341.2**

(22) Date of filing: **02.10.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Gocev, Pavel**
**13595 Berlin (DE)**
• **Grimm, Stephan**
**81825 München (DE)**
• **Ringsquandl, Martin**
**83022 Rosenheim (DE)**

(54) **SYSTEM AND METHOD FOR MANAGING SEQUENCES OF CONSTRAINT ITEMS**

(57)     A system (100) and method (300) is provided for management of sequences of constraint items, comprising at least one parallel data processing system (106) configured via executable applications that are respectively executed by different processing resources (126, 128, 130) included in at least one memory (108) to storage extracted data in a knowledge-based database (118), to feed the gathered data inside the database (118) into at least one of the executable applications configured as a Sequence Analyzer (226) for mining sequential rules for a sequence of constraint items, to send the resulting sequential rules to at least one of the executable applications configured as a Constraint Compiler (228), to transform the sequential rules in the Constraint Compiler (228) in a logical form, and to check the logical form of the sequential rules by at least one of the executable applications configured as a Constraint Checker (224).

FIG 2

EP 3 633 561 A1

**Description**

The present disclosure is directed, in general, to managing sequences of constraint items.

The engineering of processes, which is a major part of systems and production engineering, is typically based on technical specification documents written by domain experts, e.g. production bill of processes. Engineers specify constraint items (requirements) that are imposed on the tasks and resources required to implement the processes which are essential for a correct execution of the tasks. These constraint items are often related to sequences in which the respective tasks have to be executed, here referred to as sequential constraints. This means task A is required to be executed before task B. Such sequential constraints represent domain expert knowledge and reflect expertise on how a valid process execution needs to be shaped, due to implicit physical restrictions. One example is that breaks need to be mounted on a car frame before the wheels can be put on. A sequence of constraint items expresses any form of restriction as a dependency between sub-sequences or individual steps in a sequence.

Throughout the lifecycle of process defining from first engineering sketches to the actual execution, IT-systems collect data about the specified tasks and their executed sequential order. This data can potentially be used to automatically learn and recommend new constraints to the engineers.

Furthermore, a systematic management and automated validation of such constraint items during the engineering of technical specifications, e.g. production bill of processes, and the execution of the actual processes is crucial in domains such as production process design or software engineering.

In production process design, for example, a bill of process should specify a valid sequence of tasks that can be given to a production facility with workers and machines, where then the detailed parameters of each task are specified in order to execute the whole production process. If the production process execution violates one of the specified constraint items, final products may fail quality assurance or production machines may be damaged.

Other examples can be found in the healthcare industry. For example, the processing of surgery steps comprises several constraint items which can be structured in a sequential order. This is especially important in the field of computer-aided surgery (CAS) which represents a surgical concept and set of methods, that use computer technology for surgical planning, and for guiding or performing surgical interventions.

Another example are clinical trials and especially Clinical Trial Management Systems (CTMSs) used by biotechnology and pharmaceutical industries to manage clinical trials in clinical research. The system maintains and manages planning, performing and reporting functions, along with participant contact information, tracking deadlines and milestones. Often, a clinical trial management system provides data to a business intelligence system, which acts as a digital dashboard for trial managers. CTMSs allow experts easily to access centralized data and thus reducing the number of delayed trials.

Sponsors can work with a database of previously researched contacts and names of volunteers who are suitable for participating in a given trial. Clinical trial management systems are cost- and time-effective, as they also can be used for gathering and organizing information that can be shared to different care providers and distributed across different systems. In the early phases of clinical trials, when the number of patients and tests are small, in-house or home-grown program are typically used to handle their data. In later phases, data volumes and complexity grow, motivating many organizations to adopt more comprehensive software. Available software includes budgeting, patient management, compliance with government regulations project management, financials, patient management and recruitment, investigator management, regulatory compliance and compatibility with other systems such as electronic data capture and adverse event reporting systems.

In addition to pharmaceutical and biotechnology industries, CTMSs are widely used at sites where clinical research is conducted such as research hospitals, physician practices and academic medical centres. While pharmaceutical companies that sponsor clinical trials may provide a CTMS to the sites that participate in their trials, sites may operate a CTMS to support day-to-day operations in areas such as conducting study feasibility, streamlining the workflow of the trial coordinators and investigators, providing a centralized place to house all trial-related information, and improve clinical data management by equipping staff, including biostatisticians and database administrators.

However, constraint items are often implicitly and ambiguously documented in natural language, which does not allow a consistent management, e.g. detection of duplicates of constraint items (requirements), or automated validation. Therefore, simulation is rarely used for the validation of sequences, since detailed simulation models are very expensive to develop.

In view of the foregoing it is thus an object of the present invention to provide techniques that improve and facilitate learning of sequential constraint items from several data sources and provide knowledge-based management of sequential constraint items for supporting technical process engineering.

According to a first aspect, the invention provides a system for management of sequences of constraint items, comprising: at least one parallel data processing system configured via executable applications that are respectively executed by different processing resources included in at least one memory to:

- store extracted data in a knowledge-based database;
- feed the gathered data inside the database into at least one of the executable applications configured as a Sequence Analyzer for mining sequential rules for a sequence of constraint items;
- send the resulting sequential rules to at least one of the executable applications configured as a Constraint Compiler;
- transform the sequential rules in the Constraint Compiler in a logical form;
- check the logical form of the sequential rules by at least one of the executable applications configured as a Constraint Checker.

According to the invention, a software supported documentation of constraint items for gathering, storing, searching and querying can be achieved by a knowledge-based consistency management which can manage duplicates or other relations between constraints. It is possible to automatically validate processing steps against given constraint items. By learning sequential constraint items from historic data the development and execution of technically engineered processes can be consistently described and managed.

In an advantageous embodiment, the system comprises at least one processor which is configured to extract data from at least one data source; and feed the extracted data into the knowledge-based database.

Preferably, the at least one database is a Knowledge Graph. In a further embodiment, the at least one logic form is a closed-world form.

According to another embodiment, the at least one logic form is an open-world form.

Preferably, in the system at least one of the executable applications is configured as an Ontology for storing the mined sequential rules in the know-ledge based database.

In another advantageous embodiment, at least one of the executable applications is configured as a Description Logic (DL) reasoner for evaluating the mined sequential rules in the know-ledge based database.

According to a second aspect the present invention provides a method for managing sequences of constraint items is provided comprising through operation of at least one parallel data processing system configured via executable applications that are respectively executed by different processing resources included in at least one memory, the method comprising the steps of:

- storing extracted data in a knowledge-based database;
- feeding the gathered data inside the database into at least one of the executable applications configured as a Sequence Analyzer for mining sequential rules for a sequence of constraint items;
- sending the resulting sequential rules to at least one of the executable applications configured as a Constraint Compiler;
- transforming the sequential rules in the Constraint Compiler in a logical form;
- checking the logical form of the sequential rules by at least one of the executable applications configured as a Constraint Checker.

In an advantageous embodiment, the method comprises through operation of at least one processor:

- extracting data from at least one data source; and
- feeding the extracted data into the knowledge-based database.

Preferably, the method comprises using for the at least one database a Knowledge Graph.

In another advantageous embodiment, the method comprises using for the at least one logic form a closed-world form.

Further, the method according comprises using for the at least one logic form an open-world form.

In a further advantageous embodiment, the method comprises that at least one of the executable applications is configured as an Ontology for storing the mined sequential rules in the know-ledge based database.

Preferably, the method comprises that at least one of the executable applications is configured as a Description Logic (DL) reasoner for evaluating the mined sequential rules in the know-ledge based database.

According to a third aspect the present invention provides a non-transitory computer readable medium encoded with processor executable applications that when executed by at least one processor, cause the at least one processor to carry out a method for managing sequential constraint items according to the second aspect of the present invention.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the scope of the disclosure in its broadest form.

Also, before undertaking the detailed description below, it should be understood that various definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

Fig. 1    illustrates a flow diagram of a sequence of processing steps;
Fig. 2    illustrates a functional block diagram of an example system that facilitates data sequence management of constraint items;
Fig. 3    illustrates a flow diagram of an example method that facilitate data sequence management of constraint items.

Various technologies that pertain to systems and methods that facilitate data sequence management of constraint items will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

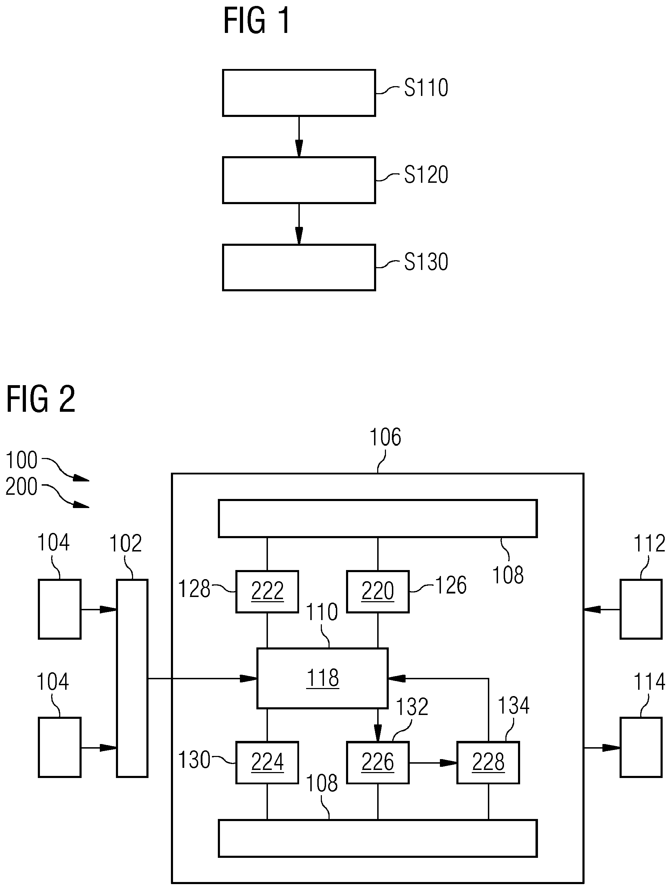

With reference to Fig. 1, an example of a sequence of processing steps S110, S120 and S130 in an industrial plant or in other areas such as in healthcare is illustrated. For example, in a bill of process development, engineers have to gather knowledge about the required list of production/processing steps (tasks) and their dependencies. Dependencies between actions can be physical restrictions such as a material needs to be surface cleaned in a step S110, then heat treated in a step S120 before it can be ultrasonic welded in a step S130. Other examples are compliance rules such as each milling operation needs to be verified by a quality check, or regulatory requirements for clinical studies in the pharmaceutical industry such as sterilizing medical devices before use.

Such sequential constraints (requirements) in production and/or administrative processes are often documented in natural language. Therefore, production and administration process engineers need to check their new (to be developed) bill of processes for such restrictions by searching through already existing bill of processes and task documentations, which are usually unstructured and available as text documents such as pdf-documents and not well-maintained. This is highly inefficient and can cause conflicts, i.e. invalid process executions.

Sequences of constraint items as defined in this document are discrete and not limited to timely sequences. Further, sequential constraint items are not limited to production processes, and also other forms of sequences are possible such as spatial sequences, e.g. in supply chain logistics, where a valid path through routes needs to be specified and forbidden sub-sequences of country border entries can be constraint items. In the field of clinical trials constraint items can refer to specific patient groups for a specific drug development.

Today information about sequential constraints are typically stored in spreadsheets or some other kind of semi-structured data format in engineering and administrative software systems, such as the Teamcenter (registered trademark) software solution. Due to the lack of semantic definitions, re-usability of previously defined sequences is usually not possible. Therefore, manual collection of information about physical dependencies by reading specifications or talking to domain experts for the technologies is involved. The outcomes of such discussions are not documented in a consistent and validatable form.

A conceptual architecture of a system 100 is illustrated in Fig. 2. The system 100 may comprise at least one processor 102 configured via executable instructions included in at least one memory to initiate a plurality of information extraction tasks that are respectively executed by different processing resources. The information extraction tasks respectively manage respective subsets of sequence data assigned to respective different sequence data sources 104. Such information extraction may include determining whether to extract at least one data item of a data sequence to fulfill at least one constraint/requirement of a production and/or technical engineering process. Also responsive to a determination to extract the at least one data item, the extraction may include removing the at least one item from one data sequence data in order to generate a new or adapted data sequence of constraint items.

The system 100 may include a parallel data processing system including a plurality of processing resources 126, 128, 130, 132, 134 capable of carrying out a data management software application 200 including a plurality of respective software applications 220, 222, 224, 226, 228 at the same time to carry out the various processes and functions described herein. Such processing resources 126, 128, 130, 132, 134 may execute from at least one memory 108.

This described parallel processing system 106, for example, may correspond to a distributed system in which each processing resource 126, 128, 130, 132, 134 corresponds to one or more processors (e.g., a microprocessor/CPU) included respectively in different computer systems (workstations, servers). However, it should also be appreciated that the described processing resource may correspond to different cores and/or execution threads of a CPU. In addition, such processing resources may correspond to virtual processors in different virtual machines executing in one or more different hypervisors executing in one or more different processors /servers.

In exemplary embodiments, the at least one memory 108 may correspond to an internal or external volatile memory (e.g., main memory, CPU cache, and/or RAM), that is included in the processor and/or in operative connection with the processor and/or shared by one or more processors. Such a memory 108 may also correspond to a nonvolatile memory (e.g., flash memory, SSD, hard drive, or other storage device or non-transitory computer readable media) in operative connection with the processor(s).

The described data processing system 100 may include at least one input device 112 and at least one display device 114 in operative connection with one or more of the processing resources 126, 128, 130, 132, 134. The input device 112, for example, may include a mouse, keyboard, touch screen, or other type of input device capable of providing user inputs to the processor. The display device 114, for example, may include an LCD or AMOLED display screen, monitor, or any other type of display device capable of displaying outputs from the processor.

The data processing system 100 also includes one or more data stores 110. The processor(s) 126, 128, 130, 132, 134 may be configured to manage, retrieve, generate, use, revise, and store energy management data and/or other information described herein from/in the data store 110. Examples of a data store may include a database 118, file system, hard drive, SSD, memory card and/or any other type of device or system that stores non-volatile data. The database 118 may be a graph/triple-structured database supporting W3C RDF (Resource Description Format) data format. The historic process executions (e. g. data about past realizations of processes) are stored in a graph-structured database such as a Knowledge Graph. Furthermore, the database 118 may simultaneously also store the constraints in a semantic data model.

In order to achieve a consistent management of the extracted data sequence constraints, they are preferably stored inside the Knowledge Graph (KG) with clearly defined semantics.

For the storage of the data sequence in the database 118 a closed-world assumption can be used. One option is the W3C recommendation Shapes Constraint Language (SHACL) as it can be directly represented inside a Knowledge Graph and is sufficient for the expressivity of SPARQL-based constraints. Type-bound constraints (SHACL target class) allow an efficient validation even in large-scale Knowledge Graphs. A target type of a constraint can be defined differently. It can mean either a constraint that is attached to a certain type of process or a certain type of step/operation in the sequence.

Another option is an open-world assumption as axioms of ontology concepts are typically natively supported by Knowledge Graphs.

The software application 200 may include the one or more data management software applications 220, 222, 224, 226, 228 that may be adapted to carry out one or more of the processes and functions described herein associated with managing data sequences of constraint items.

The data management software application 220 may be configured as an Ontology representing the domain vocabulary. A domain defines the scenarios in which sequences happen such as a steel manufacturing domain. Each domain has a particular vocabulary that defines conceptual terms and relations about their sequences, of processes and their items including rich type information. An example is a welding process as a specific step in a manufacturing process. The welding process is a type of an abstract blueprint of the whole process. The same applies for the other types of processing steps. A relation between the types expresses sequential successor relationships, e.g. 'is followed By'.

The data management software application 222 can be configured as a Description Logic (DL) reasoner which can interface with the ontology 220 to reason and query the axiomatized sequential constraint concepts.

The data management software application 224 can be configured as a Constraint Checker for checking if a given (partial) process conforms to all stored constraints in the Knowledge Graph 118. An implementation of the Constraint Checker 224 may be a SPARQL engine, for example if SHACL or SPIN rules are used to formulate the closed-world constraints.

The data management software application 226 can be configured as a Sequence Analyzer using at least one data sequence mining algorithm. The Sequence Analyzer 226 is adapted to interface with the Knowledge Graph 118 to retrieve typed sequences and deliver results in form of sequential rules. Support and confidence parameters need to be set by a domain expert user.

The data management software application 228 can be configured as a Constraint Compiler for taking results from the Sequence Analyzer 226 and translating the sequential rules into at least two different logical representations, a closed-world and an open-world representation, which are then sent to the Knowledge Graph 118 and the Ontology 220 respectively.

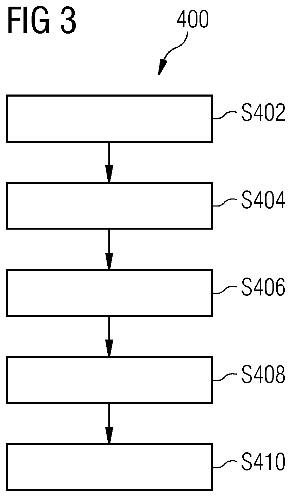

Referring now to Fig. 3, a method 400 is illustrated that facilitate data sequence management of constraint items. While the method is described as being a series of acts that are performed in a sequential order, it is to be understood that the method may not be limited by this order. For instance, unless stated otherwise, some acts may occur in a different order that what is described herein. In addition, in some cases, an act may occur concurrently with another act. Furthermore, in some instances, not all acts may be required to implement a method described herein.

With respect to Fig. 3, the method 400 may start at step S402 and may include several acts or steps carried out through operation of at least one processor. In step S402 historic data about processes or other transactions are stored in the Knowledge Graph 118. In this step S402 existing data sequence information of historic processes (e.g. data about past realizations of processes) or transactions are integrated into a semantic data model, i.e. an RDF-based knowledge graph. Here, rich semantic type information in form of unary predicates is added to the individual entities. The types are provided in terms of a schema (i.e. an OWL ontology). The sequential relations between processing steps is defined as a binary predicate, e.g. 'isFollowedBy'. An example is a processing step such as a type "Steel Heat Treatment" which has a successor step of type "Ultrasonic Welding" in a plant for steel production.

At a second step S404, the gathered data inside the Knowledge Graph 118 are fed into the Sequence Analyzer 226.

As every entity in a knowledge graph is a node also each step entity in each sequence can be defined as a node. A path from a starting node (starting step) to an end node (end step) defines the sequence. Each data sequence of historic data from a starting point node to an end point node in the Knowledge Graph 118 is gathered in the form of ordered lists. The individual points in the lists are substituted by one of their assigned ontological types.

The type-substituted ordered lists are input to a sequential rule mining algorithm (e.g. RuleGrowth and ERMiner), which outputs rules in the form $X \rightarrow Y$, where X is a series of processing and/or transaction steps and Y is another set of processing and/or transaction steps. According to the specified sequence rule, the series of steps X have to be performed in a given sequence before the implementation of all steps of Y can be started.

In the example mentioned above, the sequential rule would be defined as: (Steel Heat Treatment) $\rightarrow$ (Ultrasonic Welding). In a step S406 the resulting sequential rules mined by the Sequence Analyzer 226 are sent to the Constraint Compiler 228.

In a step S408 the mined sequential rules are transformed by the Constraint Compiler 228 into a logical equivalent form such that the sequential rules can be interpreted as logical constraint items.

In the following a first-order logic for the logical constraint items is described.

In this embodiment, the sequential relation between the constraints is assumed to be transitive by nature:
$$\forall x, y, z: \sigma(x, y), \sigma(y, z) \rightarrow \sigma(x, z)$$

There are several ways to deal with transitivity in RDF-based knowledge graphs. One possibility is to invoke the Description Logic reasoner 222 on the declared property. In SPARQL transitivity can be queried by property paths using the '*'-operator as described in the example below.

The following table defines the translation from sequential rules to their logical equivalent form:

| Case | Sequential rule | First-order logical form |
|---|---|---|
| General case | $\{A_1, A_2, ... , A_n\} \rightarrow \{B_1, B_2, ..., B_m\}$ | $\forall x_1, x_2, ... , x_n: A_1(x_1) \wedge A_2(x_2) ... \wedge A_n(x_n) \rightarrow \exists y_1, y_2, ... , ym : \sigma(x_1, y_1) \wedge ... \wedge \sigma(x_1, y_m) \wedge \sigma(x_2, y_1) \wedge ... \wedge \sigma(x_2, y_m) \wedge ... \wedge \sigma(x_n, y_m) \wedge B_1(y_1) \wedge B_2(y_2) \wedge ... B_m(y_m)$ |
| Example 1) | $\{A\} \rightarrow \{B\}$ | $\forall x: A(x) \rightarrow \exists y: \sigma(x, y) \wedge B(y)$ |
| Example 2) | $\{A\} \rightarrow \{B,C\}$ | $\forall x: A(x) \rightarrow \exists y, z: \sigma(x, y) \wedge \sigma(x, z) \wedge B(y) \wedge C(z)$ |
| Example 3) | $\{A, B\} \rightarrow \{C\}$ | $\forall x, y: A(x) \wedge B(y) \rightarrow \exists z: \sigma(x, z) \wedge \sigma(y, z) \wedge C(z)$ |

Furthermore, it is possible to embed the logical form in different logical frameworks such as closed-world description logics and open-world description logics.

For closed-world constraints the data logic language family is typically used for representing closed-world rules, such as the sequence integrity constraints in this case. The "~" operator is used to denote negation as failure and the empty head as "⊥". A rule with an empty head means that its content shall never be true.

The following table represents the closed-world transformation of constraints:

| Case | Sequential rule | Closed-world logic rule form |
|---|---|---|
| Example 1) | $\{A\} \rightarrow \{B\}$ | $\sigma\_B(x) \leftarrow \sigma(x, y) , B(y)$ <br> $\perp \leftarrow A(x), \sim\sigma\_B(x)$ |
| Example 2) | $\{A\} \rightarrow \{B, C\}$ | $\perp \leftarrow A(x), \sigma\_B(x)$ <br> $\perp \leftarrow A(x), \sim\sigma\_C(x)$ |

(continued)

| Case | Sequential rule | Closed-world logic rule form |
|------|-----------------|------------------------------|
| Example 3) | {A, B} → {C} | $\sigma\_C(x, y) \leftarrow \sigma(x, z), \sigma(y, z), C(z)$<br>$\perp \leftarrow A(x), B(y), \sim \sigma\_C(x, y)$ |

Taking the closed-world assumption, these rules can be evaluated as constraints by e.g. the Description Logic (DL) Reasoner 222 which is also able to deal with loops in the rule definitions.

For open-world constraints steps A, B, and C in a mined data sequence correspond to concepts in the Ontology 220. Sigma ($\sigma$) is used to denote the generic sequential relation between sequence steps A, B, ... N.

The respective open-world transformation of constraints has the following form:

| Case | Sequential rule | Open-world form |
|------|-----------------|-----------------|
| Example 1) | {A} → {B} | $\mathbf{Ex1} \equiv \exists\sigma.(A \sqcap \exists\sigma.B)$ |
| Example 2) | {A} → {B, C} | $\mathbf{Ex2} \equiv \exists\sigma.(A \sqcap \exists\sigma.B \sqcap \exists\sigma.C)$ |
| Example 3) | {A, B} → {C} | $\mathbf{Ex3} \equiv \exists\sigma.(A \sqcap \exists\sigma.(B \sqcap \exists\sigma.C)) \sqcup$ $(B \sqcap \exists\sigma.(A \sqcap \exists\sigma.C))$ |

In the open-word form when multiple constraint items are in the body of the sequential rule, it is necessary to check for each possible combination of these items, concretely either A→B→C or A→B→C, since one cannot enforce both A and B to be followed by the same C.

A definition of the sequential rules above in Description Logics allows to reason about consistency and redundancy.

For example, one can query for sub-parts of constraint items (i.e. containment):

Present all constraint items where A needs to be followed by C at some point:

Query ≡ ∃ isFollowedBy. ( $A \sqcap \exists$ isFollowedBy.C)

The DL reasoner 222 (e.g. OWL 2 Hermit) will give as results that constraint concepts Ex2 and Ex3 are special cases of the Query concept:

Ex2 $\sqsubseteq$ Query, Ex3 $\sqsubseteq$ Query

Since constraints and constraint items are represented in a query-able graph-database using the same vocabulary as the historic sequence data, other software applications can access the graph-database and search for constraints in a way that other domain users can understand. This means, as the constraint knowledge is query-able it enables re-use and sharing of across different domains, e.g. IT-systems.

In a step S410 the constraints are validated. The closed-world representation can be used for a validation.

The proposed system 100 and method 400 allow to learn sequential constraint items and rules in connection with semantic data models and knowledge graph databases 118. The proposed translation and representation mechanism executed by several software applications 126, 128, 130, 132, 134 enables management and automated validation of sequence constraint items as part of a knowledge graph database 118 including the Ontology 220 and SHACL shapes as one possible W3C standardized representation of the closed-world constraints.

It is possible to retrieve constraint items from historic data and sequential data patterns which can be validated. Furthermore, re-usable and shareable knowledge about sequential constraint items across different domains in a common semantic model can be defined. Furthermore, the constraint knowledge from different sources (for example from the monitoring of events in environments like production, development, research, healthcare, e-commerce, etc.) can be continuously updated and a context-sensitive validation of sequences of constraint items can be undertaken.

By the described system and method, a translation and representation of sequential data patterns in different logical formalism is possible. As one example a bill of processing steps for a production process is illustrated in the following table:

| Action Type | Action Order | Text Description |
|-------------|--------------|------------------|
| Drilling | 1 | Perform drilling on work piece |

(continued)

| Action Type | Action Order | Text Description |
|---|---|---|
| Heat Treatment | 2 | Metallurgical heat treatment |
| Ultrasonic Welding | 3 | Welding of sides |
| Surface Cleaning | 4 | Wash of debris |
| ... | ... | ... |

This information extraction results are transferred into the Knowledge Graph 118 by using a semantic triple (RDF) notation:

| Subject | Predicate | Object |
|---|---|---|
| BoP_ 1 | rdf:type | BoP |
| Drilling_ 1 | inRouting | BoP_ 1 |
| Heat Treatment 1 | inRouting | BoP_ 1 |
| Ultrasonic Welding 1 | inRouting | BoP_ 1 |

| Surface Cleaning 1 | inRouting | BoP_ 1 |
|---|---|---|
| Drilling_1 | rdf:type | Drilling |
| Heat Treatment 1 | rdf:type | Heat Treatment |
| Ultrasonic Welding 1 | rdf:type | Ultrasonic Welding |
| Surface Cleaning 1 | rdf:type | Surface Cleaning |
| Drilling_1 | isFollowedBy | Heat Treatment 1 |
| Heat Treatment 1 | isFollowedBy | Ultrasonic Welding 1 |
| Ultrasonic Welding 1 | isFollowedBy | Surface Cleaning 1 |

After applying the transitive closure to the followedBy relation, more facts can be added to the Knowledge Graph 118:

| Subject | Predicate | Object |
|---|---|---|
| Drilling_ 1 | isFollowedBy | Ultrasonic Welding 1 |
| Drilling_ 1 | isFollowedBy | Surface Cleaning 1 |
| Heat Treatment 1 | isFollowedBy | Surface Cleaning 1 |

Now, by using the sequential rule mining algorithm of the Sequence Analyzer 226 the following typed sequence is achieved: Drilling → Heat Treatment → Ultrasonic Welding → Surface Cleaning

In case of similar sequences in another bill of processing steps, the sequential rule mining algorithm gives a result like the following:

If both a "Heat Treatment" and an "Ultrasonic Welding" action are applied, then at least one "Surface Cleaning" action is needed.

| Rule ID | Sequential rule | Support (%) | Confidence |
|---|---|---|---|
| R1 | {Heat Treatment, Ultrasonic Welding} → {Surface Cleaning} | 0.42 | 0.9 |

This rule can be accepted by a domain expert or automatically if it exceeds a certain support and confidence threshold. This result can be described in a closed-world logic translation as:

$$\text{isFollowedBy\_Surface\_Cleaning}(x,y) \leftarrow \text{isFollowedBy}(x,z), \text{isFollowedBy}(y,z), \text{Surface\_Cleaning}(z)$$
$$\perp \leftarrow \text{Heat\_Treatment}(x), \text{Ultrasonic\_Welding}(y), \sim \text{isFollowedBy\_Surface\_Cleaning}(x,y)$$

In practice a possible implementation could be done in the Shapes and Constraint language (SHACL), which supports arbitrary SPARQL queries and validates them against instances in a closed-world manner:

```
SELECT $this WHERE {?x0 produces $this . ?x1 produces $this.
?x0 type Heat_Treatment. ?x1 type Ultrasonic_Welding.
 FILTER NOT EXISTS {
  ?x0 isFollowedBy* ?fx .
  ?x1 isFollowedBy* ?fx .
  ?fx type Surface_Cleaning.
 } }
```

The surrogate relation produces makes sure that $this is bound to a bill of processing steps that contains all processing steps. The **FILTER NOT EXISTS** clause is used to specify negation as failure and isFollowedBy* denotes the transitive chain of followers.

In an open-world translation this result is described as:

**R1** $\equiv$ $\exists$ isFollowedBy. (Heat_Treatment $\sqcap$ $\exists$ isFollowedBy. (Ultrasonic_Welding $\sqcap$ $\exists$ isFollowedBy. Surface_Cleaning)) (Ultrasonic_Welding $\sqcap\exists$ isFollowedBy. (Heat_Treatment $\sqcap\exists$ isFollowedBy. Surface_Cleaning))

Assuming there already exists a constraint item of the form:

**R2** $\equiv$ $\exists$ isFollowedBy. (Heat_Treatment $\sqcap$ $\exists$ isFollowedBy. (Ultrasonic_Welding $\sqcap$ $\exists$ isFollowedBy.Surface_Cleaning))

A DL Reasoner 222 would detect that **R2** is a special case of **R1** and can be subsumed accordingly, i.e. **R2** $\sqsubseteq$ **R1.**

As discussed previously, acts associated with the above-described method may be carried out by one or more processors 126, 128, 130, 132, 134. Such processor(s) may be included in one or more data processing systems 100, for example, that execute from at least one memory 108 executable instructions 220, 222, 224, 226, 228 (such as software instructions) that are operative to cause these acts to be carried out by the one or more processors.

Also, as used herein a processor corresponds to any electronic device that is configured via hardware circuits, software, and/or firmware to process data. For example, processors described herein may correspond to one or more (or a combination) of a microprocessor, CPU, or any other integrated circuit (IC) or other type of circuit that is capable of processing data in a data processing system. It should be understood that a processor that is described or claimed as being configured to carry out a particular described/claimed process or function may: correspond to a CPU that executes computer/processor executable instructions stored in a memory in the form of software and/or firmware to carry out such a described/claimed process or function; and/or may correspond to an IC that is hard wired with processing circuitry (e.g., an FPGA or ASIC IC) to carry out such a described/claimed process or function.

It should also be understood that a processor that is described or claimed as being configured to carry out a particular described/claimed process or function may correspond to the combination of the processor with the software instructions loaded/installed into the described memory (volatile and/or non-volatile), which are currently being executed and/or are available to be executed by the processor to cause the processor to carry out the described/claimed process or function. Thus, a processor that is powered off or is executing other software, but has the described software instructions installed on a storage device in operative connection therewith (such as a hard drive or SSD) in a manner that is setup to be executed by the processor (when started by a user, hardware and/or other software), may also correspond to the described/claimed processor that is configured to carry out the particular processes and functions described/claimed herein. Further the phrase "at least one" before an element (e.g., a processor) that is configured to carry out more than one function/process may correspond to one or more elements (e.g., processors) that each carry out the functions/processes and may also correspond to two or more of the elements (e.g., processors) that respectively carry out different ones of the one or more different functions/processes.

It is important to note that while the disclosure includes a description in the context of a fully functional system and/or a series of acts, those skilled in the art will appreciate that at least portions of the mechanism of the present disclosure and/or described acts are capable of being distributed in the form of computer/processor executable instructions (e.g., the described software instructions and/or corresponding firmware instructions) contained within a non-transitory machine-usable, computer-usable, or computer-readable medium in any of a variety of forms, and that the present disclosure applies equally regardless of the particular type of instruction or data bearing medium or storage medium utilized to actually carry out the distribution. Examples of non-transitory machine usable/readable or computer usable/readable mediums include: ROMs, EPROMs, magnetic tape, hard disk drives, SSDs, flash memory, CDs, DVDs, and Blu-ray disks. The computer/processor executable instructions may include a routine, a sub-routine, programs, applications, modules, libraries, and/or the like. Further, it should be appreciated that computer/processor executable instructions may correspond to and/or may be generated from source code, byte code, runtime code, machine code, assembly language, Java, JavaScript, Python, C, C#, C++ or any other form of code that can be programmed/configured to cause at least one processor to carry out the acts and features described herein. Still further, results of the described/claimed processes or functions may be stored in a computer-readable medium, displayed on a display device, and/or the like.

Furthermore, the data processing system 100 can communicate over a network with one or more other data processing systems such as a server (which may in combination correspond to a larger data processing system). For example, a larger data processing system may correspond to a plurality of smaller data processing systems implemented as part of a distributed system in which processors associated with several smaller data processing systems may be in communication by way of one or more network connections and may collectively perform tasks described as being performed by a single larger data processing system. Thus, it is to be understood that when referring to a data processing system, such a system may be implemented across several data processing systems organized in a distributed system in communication with each other via a network.

It should also be understood that the term "processor" means any device, system or part thereof that processes at least one operation, whether such a device is implemented in hardware, firmware, software or any combination thereof. It should be noted that the functionality associated with any particular processor may be centralized or distributed, whether locally or remotely. The described processor and memory may be included in a controller. Further, a controller may correspond to the described data processing system 100 or any other hardware circuit that is operative to control at least one operation.

In addition, it should be appreciated that data processing systems 100 may include virtual machines in a virtual machine architecture or cloud environment. For example, processor 102 and associated components may correspond to the combination of one or more virtual machine processors of a virtual machine operating in one or more physical processors of a physical data processing system. Examples of virtual machine architectures include VMware ESCi, Microsoft Hyper-V, Xen, and KVM.

Those of ordinary skill in the art will appreciate that the hardware depicted for the data processing system may vary for particular implementations. For example, the data processing system 100 in this example may correspond to a controller, computer, workstation, server, PC, notebook computer, tablet, mobile phone, and/or any other type of apparatus/system that is operative to process data and carry out functionality and features described herein associated with the operation of a data processing system, computer, processor, software components, and/or a controller discussed herein. The depicted example is provided for the purpose of explanation only and is not meant to imply architectural limitations with respect to the present disclosure.

This invention disclosure is concerned with a system for learning sequential constraint items from data sources and the consistent management of the learned constraint items contained that would allow re-usage and automated validation. The management of constraint knowledge (query-able knowledge) can be improved. The received data can be checked regarding data consistency which improves the data quality by finding duplicated constraint items. During the development of a bill of new processing steps a continuous validation is possible which supports engineers. Furthermore, an automatically filling and recommendation of missing steps in a bill of processing steps can be achieved.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of the data processing system 100 may conform to any of the various current implementations and practices known in the art.

As used herein, the terms "component" and "system" are intended to encompass hardware, software, or a combination of hardware and software. Thus, for example, a system or component may be a process, a process executing on a processor, or a processor. Additionally, a component or system may be localized on a single device or distributed across several devices.

Also, although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

Although an exemplary embodiment of the present disclosure has been described in detail, those skilled in the art will understand that various changes, substitutions, variations, and improvements disclosed herein may be made without departing from the spirit and scope of the disclosure in its broadest form.

**Claims**

1. A system (100) for management of sequences of constraint items, comprising:

   at least one parallel data processing system (106) configured via executable applications that are respectively executed by different processing resources (126, 128, 130) included in at least one memory (108) to:

   store extracted data in a knowledge-based database (118);
   feed the gathered data inside the database (118) into at least one of the executable applications configured as a Sequence Analyzer (226) for mining sequential rules for a sequence of constraint items;
   send the resulting sequential rules to at least one of the executable applications configured as a Constraint Compiler (228);
   transform the sequential rules in the Constraint Compiler (228) in a logical form;
   check the logical form of the sequential rules by at least one of the executable applications configured as a Constraint Checker (224).

2. The system according to claim 1, comprising at least one-processor (102) which is configured to:

   extract data from at least one data source (104); and feed the extracted data into the knowledge-based database (118).

3. The system according to claim 1 or 2, wherein the knowledge-based database (118) comprises a Knowledge Graph.

4. The system according to any one of claims 1 to 3, wherein the at least one logic form is a closed-world form.

5. The system according to any one of claims 1 to 3, wherein the at least one logic form is an open-world form.

6. The system according to any one of claims 1 to 5, wherein at least one of the executable applications is configured as an Ontology (220) for storing the mined sequential rules in the knowledge-based database (118).

7. The system according to any one of claims 1 to 6, wherein at least one of the executable applications is configured as a Description Logic, DL, reasoner (222) for evaluating the mined sequential rules in the know-ledge based database.

8. A method (400) for managing sequences of constraint items, comprising:

   through operation of at least one parallel data processing system (106) configured via executable applications (220, 222, 224, 226) that are respectively executed by different processing resources (126, 128, 130, 132) included in at least one memory (108):

   storing (S402) extracted data in a knowledge-based database (118);
   feeding (S404) the gathered data inside the database (118) into at least one of the executable applications configured as a Sequence Analyzer (226) for mining sequential rules for a sequence of constraint items;
   sending (S406) the resulting sequential rules to at least one of the executable applications configured as a Constraint Compiler (228);
   transforming (S408) the sequential rules in the Constraint Compiler (228) in a logical form;
   checking (S410) the logical form of the sequential rules by at least one of the executable applications configured as a Constraint Checker (224).

9. The method according to claim 8, comprising through operation of at least one processor (102):

extracting data from at least one data source (104); and
feeding the extracted data into the knowledge-based database (118).

10. The method according to claim 8 or 9, using for the at least one database (118) a Knowledge Graph.

11. The method according to any one of claims 8 to 10, using for the at least one logic form a closed-world form.

12. The method according to any one of claims 8 to 10, using for the at least one logic form an open-world form.

13. The method according to any one of claims 8 to 12, wherein at least one of the executable applications is configured as an Ontology (220) for storing the mined sequential rules in the know-ledge based database (118).

14. The method according to any one of claims 8 to 13, wherein at least one of the executable applications is configured as a Description Logic, DL, reasoner (222) for evaluating the mined sequential rules in the know-ledge based database.

15. A non-transitory computer readable medium encoded with processor executable applications that when executed by at least one processor, cause the at least one processor to carry out a method for managing sequential constraint items according to any one of claims 8 to 14.

# FIG 1

# FIG 2

# FIG 3

400

S402

S404

S406

S408

S410

Europäisches
Patentamt

European
Patent Office

Office européen
des brevets

## EUROPEAN SEARCH REPORT

Application Number

EP 18 19 8341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Philippe Fournier-Viger ET AL: "A Survey of Sequential Pattern Mining", , 1 February 2017 (2017-02-01), XP055490335, Retrieved from the Internet: URL:http://philippe-fournier-viger.com/dspr-paper5.pdf [retrieved on 2018-07-05] * page 55 - page 56 * * page 65 - page 69 * ----- | 1-15 | INV. G06N5/02 G06F16/36 |
| A | CARLOS VIEGAS DAMÁSIO ET AL: "Supporting Open and Closed World Reasoning on the Web", 1 January 2006 (2006-01-01), PRINCIPLES AND PRACTICE OF SEMANTIC WEB REASONING LECTURE NOTES IN COMPUTER SCIENCE;;LNCS, SPRINGER, BERLIN, DE, PAGE(S) 149 - 163, XP019042858, ISBN: 978-3-540-39586-7 * page 159, paragraph 4 * ----- | 1,4,5,8, 11,12,15 | |
| A | US 2008/040308 A1 (RANGANATHAN ANAND [US] ET AL) 14 February 2008 (2008-02-14) * paragraph [0023] - paragraph [0025] * ----- | 7,14 | TECHNICAL FIELDS SEARCHED (IPC) G06N G06F |

The present search report has been drawn up for all claims

| Place of search | Date of completion of the search | Examiner |
|---|---|---|
| The Hague | 26 March 2019 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 8341

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2019

| Patent document cited in search report | Publication date | Patent family member(s) | Publication date |
|---|---|---|---|
| US 2008040308 A1 | 14-02-2008 | NONE | |

EPO FORM P0459

For more details about this annex : see Official Journal of the European Patent Office, No. 12/82